Europäisches Patentamt

European Patent Office

Office européen des brevets

(11) Publication number: **0 275 350**
**A2**

# EUROPEAN PATENT APPLICATION

(21) Application number: **87108728.4**

(22) Date of filing: **17.06.87**

(51) Int. Cl.4: **B65D 81/24**

(30) Priority: **20.01.87 US 5520**

(43) Date of publication of application:
**27.07.88 Bulletin 88/30**

(84) Designated Contracting States:
**BE CH DE ES FR GB IT LI NL SE**

(71) Applicant: Teepak, Inc.
Executive Plaza East Suite 1100 1211 West
22nd Street
Oakbrook Illinois 60521(US)

(72) Inventor: **Beyer, Myron S.**
**2050 Spring Green**
**Wheaton Illinois 60187(US)**
Inventor: **Pfeifer, Patricia L.**
**17W 720 Butterfield Apartment 118**
**Oak Brook Illinois 60181(US)**

(74) Representative: **Weber, Dieter, Dr. et al**
**Dr. Dieter Weber und Dipl.-Phys. Klaus**
**Seiffert Patentanwälte**
**Gustav-Freytag-Strasse 25 Postfach 6145**
**D-6200 Wiesbaden 1(DE)**

(54) Containers and methods for packaging perishable foodstuffs for enhanced shelf-life.

(57) Flexible and rigid containers having built-in dividers for separating stored fodstuffs from liquids released therefrom exhibit extended shelf-life over foodstuffs allowed to remain in pools of such liquid.

Fig. 1.

EP 0 275 350 A2

## CONTAINERS AND METHODS FOR PACKAGING PERISHABLE FOODSTUFFS FOR ENHANCED SHELF-LIFE

### BACKGROUND OF THE INVENTION

The present invention relates generally to packaging, and more specifically, to containers for packaging edible products and methods for extending the freshness and shelf-life of foodstuffs during storage.

Perishable food products, including certain vegetables, fish, seafood, beef, poultry, etc., are customarily processed, packaged and then frozen by food processors in order to maintain product freshness, prevent spoilage and greatly extend shelf-life beginning with shipping to the retailer and final consumption by the consumer. Thus, packaging and freezing methods have served as both a convenience and as a viable means for extending the freshness of many foods from hours to several months.

Although freezing methods are widely used and accepted convenient means for extending shelf-life of food products, such methods are not satisfactory under all circumstances. For instance, freezing usually requires more sophisticated packaging, such as in the case of meat products to avoid crystallization of water, dehydration and freezer burn of the foodstuff. In spite of more advanced technology in this field, certain foods like poultry, fish and seafoods are frequently more preferred by consumers if freshly processed and maintained under refrigeration without being frozen.

Many kinds of produce, including certain fruits and vegetables like lettuce, cabbage, tomatoes, cucumbers, radishes, apples, oranges, grapefruit, lemon, etc., cannot be satisfactorily frozen. Vegetables like lettuce, and especially radishes and cucumbers after being processed by slicing can be maintained in containers and stored for about two to five days under refrigeration. With extended storage times, however, many leafy fresh vegetables, cucumbers, tomatoes, radishes, peppers, etc., stored in conventional refrigeration containers lose their crispness, undergo deterioration and are no longer considered acceptable for consumption. Controlled atmospheres can, in some instances, enhance the shelf-life of some perishable foodstuffs by controlling respiration, metabolism and bacterial growth. However, fresh processed vegetables, for example, having high levels of cellular fluids including water are released inside their containers during storage along with fluids remaining on the vegetables from normal processing. Consequently, nonfrozen perishables stored in pools of such fluids in conventional refrigeration packaging even under a controlled atmosphere still undergo bacterial deterioration leading to high levels of spoilage. Accordingly, there is need for improved storage containers and methods for extending the shelf-life of food products without freezing.

### BRIEF DESCRIPTION OF THE INVENTION

It is a principal object of the present invention to provide improved storage containers for extending the freshness and shelf-life of perishable foodstuffs by providing means for automatically separating fluids packaged with or exuded from the foodstuffs during the storage period.

It is still a further object of the present invention to provide methods for retarding spoilage and enhancing the interval for storage of perishable foods betweeen the time of processing to the time of consumption without significant loss in freshness, flavor and appearance.

Generally, the present invention includes a closable storage container for enhancing the shelf-life of perishable products, which comprises a liquid impermeable tubular body, the tubular body having means for preventing loss of liquid therefrom at a first end, the tubular body and means for preventing the loss of liquid defining an interior chamber with a product inlet at a second end, the interior chamber having divider means for forming an upper chamber contiguous to the product inlet for storage of the perishable products, and a lower chamber for storage of liquids released by the perishable products, the divider means having means for drainage of liquid from the upper chamber to the lower chamber.

The storage containers may be either flexible or rigid type, e.g. polymeric disposable food grade films, such as polyethylene or rigid reusable plastics, such as heavy gauge polypropylene or reusable glass. Preferred contianers include sealable envelopes, such as plastic bags, pouches, etc., which can be sealed by means of thermal or mechanical energy, e.g. ultrasound. Also included are coextruded films having transmission barriers for low gas and moisture permeability. Preferred embodiments also include rigid containers, such as polymer coated paperboard and plastic bucket/barrel shaped containers fabricated from medium or high density polyolefins.

The present invention also contemplates methods for enhancing the shelf-life and freshness of food products during storage comprising the steps of:

a) providing a contianer, which comprises a liquid impermeable tubular body, the tubular body having means for preventing loss of liquid therefrom at a first end, the tubular body and means for preventing the loss of liquid defining an interior chamber with a food product inlet at a second end, the interior chamber having divider means for forming an upper chamber contiguous to the food product inlet for storage of the food products, and a lower chamber for storage of liquids from the food product without being in contact with said food product, the divider means having means for drainage of liquid from the upper chamber to the lower chamber;

b) filling the container with the food product, and

c) sealing the second end of the container.

The methods included herein also contemplate packing foods under ambient air environment, as well as controlled gas phase environments to further enhance product stability and shelf-life expectancies.

These and other features and advantages will become more apparent from the following more detailed description of the invention.

## BRIEF DESCRIPTION OF THE DRAWINGS

For a further understanding of the invention, as well as the characterizing features, reference should now be made to the following detailed description thereof taken in conjunction with the accompanying drawings wherein:

FIG. 1 is a front elevational view of a filled flexible two-dimensional tubular pouch with a single lower seal and substantially V-shaped divider.

FIG. 2 is a modified version of the embodiment of FIG. 1 with an unfilled flexible tubular pouch having dual side welded edges and a high porosity V-shaped divider.

FIG. 3 is a front elevational view of a filled, triple welded tubular pouch and a substantially concave-shaped divider.

FIG. 4 is a perspective view of a three-dimensional flexible kraft grocery style bag with a funnel-like divider welded to container sidewalls.

FIG. 5 is an elevated sectional view of a rigid bucket style food container with a funnel-like divider.

FIGS. 6 and 7 are elevational and sectional views respectively of flexible and rigid type containers having noncurved dividers.

## DETAILED DESCRIPTION OF THE INVENTION

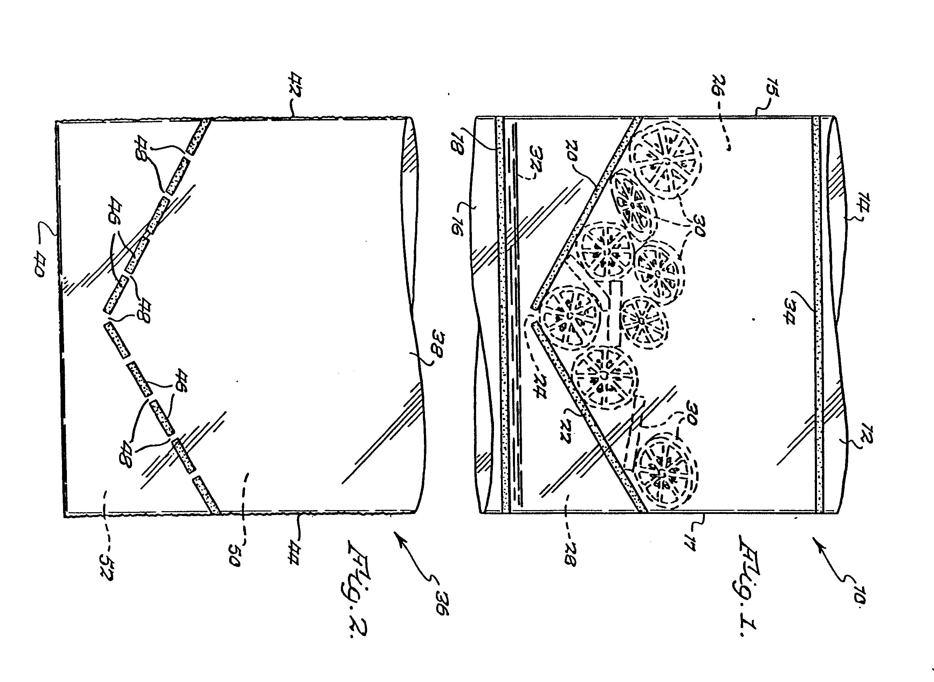

Turning first to FIG. 1, there is shown a first embodiment of a two-dimensional flexible pouch shaped receptacle 10 formed from a tubular type film 12. Typically, the flexible pouches can be fabricated from any food grade polymeric film, which includes but is not limited to homopolymers, copolymers and terpolymers, like polyolefins, e.g. polyethylene, polypropylene, ethylene-vinyl acetate copolymers, and the like. The film may be either singleply or multiply, oriented or nonoriented. For example, a multiply packaging film prepared by coextruding a medium density polyethylene film onto one side of a nylon-6 barrier and an ethylene-vinyl acetate layer onto the opposite side of the barrier provides a good packaging film when it is desired to limit the transmission of gases through container walls; especially when a controlled atmosphere inside the sealed package is desired for further enhancement of shelf-life, as discussed in further detail below. Such coextruded films are prepared by known methods requiring the exercise of ordinary skill.

The tubular type film may have a longitudinal seam, however, seamless tubular type film is most preferred. Lengths of tubular film, e.g. 10 inch diameter, may be severed from a continuous roll of the material in a direction normal to the longitudinal axis at upper and lower ends 14 and 16, respectively. A predetermined length of severed film is creased into a flattened tubular body forming side edges 15 and 17. The addition of bottom weld 18 running the full width of the tube edge-to-edge provides an envelope body.

Methods of forming seals as disclosed and claimed herein are intended to include virtually all means of providing adhesion between film surfaces. Adhesives may be applied to surfaces and cured with the application of pressure and/or heat. However, for reasons of production efficiency and economics, seals are preferably formed by the application of energy and pressure only to cause self-adhesion between film surfaces. The seals may be formed by introducing sufficient thermal energy into the film from an outside source of heat, such as by a hot bar-type sealer, heat impulse welder, hot plate welder, etc., each of which involves the application of heat and pressure to the workpiece. The expression hot bar sealing is intended to refer to contact welding methods employing one or more constantly heated electrodes. By contrast, thermal impulse sealing is intended to include processes which apply heat by compressing the film between elements equipped to provide a pulse of intense thermal energy for a brief time interval, followed immediately by cooling. Hot plate welding with a heated tool, such as a spatula may also be used. This method entails holding the film surfaces against a heated metal surface and then compressing the film under moderate pressure until cool. Other methods according to the present invention include forming seals by dielectric means which induce heat in the film with radio frequency waves.

Film surfaces may also be welded together by means of mechanical energy, such as by ultrasonic methods. Generally, this means that heating is accomplished with vibratory mechanical pressure at ultrasonic frequencies of about 20,000 Hz at low amplitude. According to this further preferred method, electrical energy is transformed into high frequency mechanical vibrations by means of a transducer which produces molecular oscillation of the film. When compressed with the horn of the welding unit, localized heat is generated as a result of friction of vibration at the joined surfaces of the film. Reliable seals can be formed by means of ultrasonic methods using commercially available equipment, such as a Model 8400 Branson ultrasonic welder available from the Branson Sonic Power Company, Danbury, Connecticut. Typically, this ultrasonic welder operating at a frequency from about 19,900 to 20,100 Hz and an amplitude of from 0 to 0.010 inches provides hermetic, nonleaking seals.

The flexible film pouch of FIG. 1 includes a substantially V-shaped divider 20 and 22 consisting of continuous, oblique seals running at approximately 45° and 135° angles downwardly from edges 15 and 17 towards the center of the envelope forming at least one central drainage opening 24. The drainage opening should be of sufficient size to allow only liquids to descend from upper food compartment 26 to lower drainage sump 28. Vegetable juices 32, e.g. from freshly sliced cucumbers 30, packaged in compartment 26 will drain slowly downwardly against dividers 20 and 22 and by gravity empty into sump 28 through opening 24. Accordingly, the shelf-life of the cucumbers will be extended as a result of separating the foodstuff from their natural juices during storage.

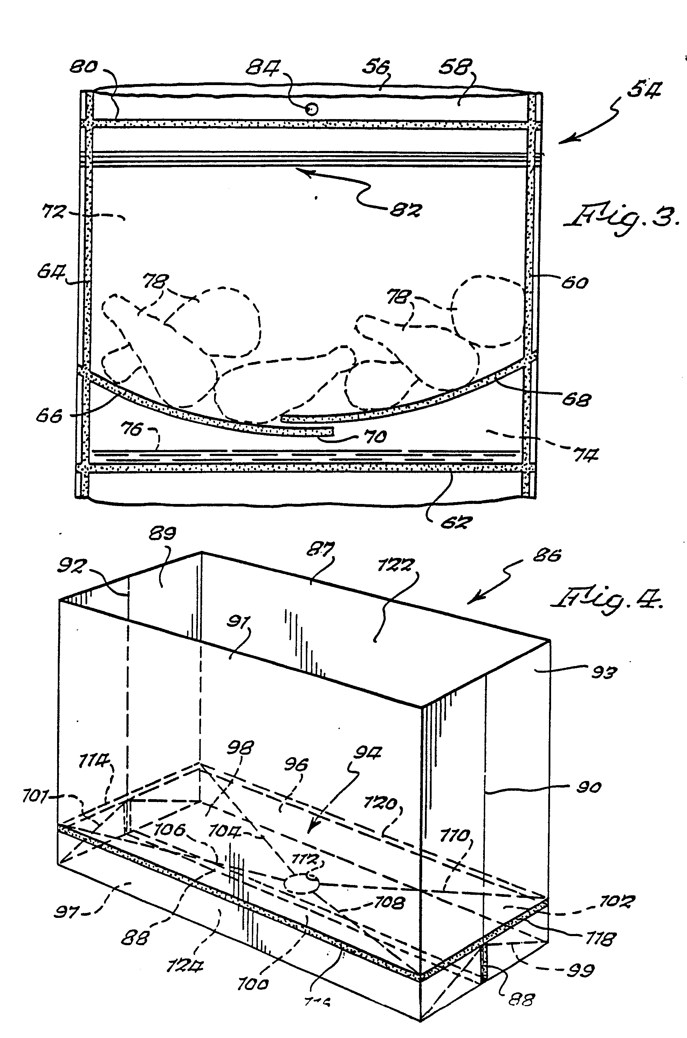

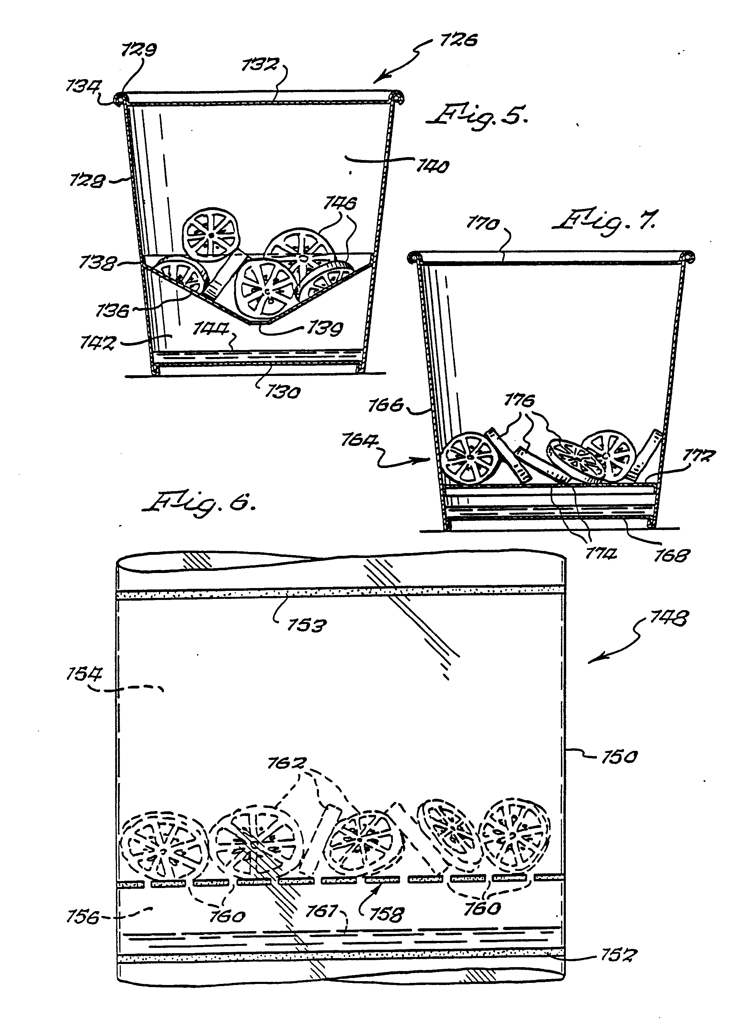

Although incurvated divider means are generally preferred for separating the interior chamber of the container into an upper storage chamber for perishable foodstuff and a lower chamber for storage of liquids released by the foodstuff, alternative embodiments of the divider means are contemplated. FIGS. 1-5 illustrate dividers generally curved towards the lower storage compartment for collection of fluids. Alternative embodiments are shown in FIGS. 6 and 7 where, for example, flexible and rigid style containers have noncurved, porous dividers spaced from the container bottoms. It is understood that the substantially planar, nonincurvated divider of FIG. 7 may also be employed as an insert welded to the walls of flexible three-dimensional type bags, such as illustrated in FIG. 4.

Upper closure seal 34 (FIG. 1) like lower seal 18 runs the entire width of the pouch.

FIG. 2 illustrates an alternative flexible pouch shaped receptacle 36 formed into a food envelope 38. According to this further embodiment a linear, nontubular sheet of flexible film is folded over itself at 40 and welded together along side edges 42 and 44 forming an envelope. A V-shaped porous separator comprising a plurality of skip seals 46 spaced from one another produce multiple drainage openings 48 between upper food compartment 50 and lower drainage compartment 52.

A third embodiment of a two-dimensional storage receptacle according to the present invention is shown in FIG. 3 as a sealed flexible pouch 54 prepared from duplicate sheets of film 56 and 58 welded face-to-face by sealing three peripheral edges together into an envelope by means of side welds 60, 64 and bottom weld 62. Pouch 54 also has an alternative incurvated divider means comprising concave-shaped dividers 66 and 68 forming an upper food compartment 72 and a lower drainage sump 74. Most conveniently, the dividers are prepared by welding film panels 56 and 58 together beginning with side welds 60 and 64 and directed downwardly towards bottom weld 62. The concave dividers will have at least one opening for drainage of liquids 76 from poultry parts 78 in the upper food compartment 72 into sump compartment 74. The drainage opening may also be equipped with valve means 70 to restrict possible backflow of liquids from sump 74 to food compartment 72 during handling and shipping. Valve 70 may be a one-way, flap-type valve of conventional design, or simply an overlapping extension of dividers 66 and 68, best illustrated by FIG. 3.

This third embodiment of a flexible type receptacle is also hermetically sealed by means of weld 80 after being filled. To open the pouch for removing a portion of the enclosed foodstuff, the bag is simply severed immediately below weld 80. For added convenience, the package may be resealed by means of a zipper type closure 82 of conventional design, such as a snap seal engaged by pinching film panels 56 and 58 in the region of the seal by running fingers slowly across to form a closure. One specific example of a suitable seal would by the Ziploc type seal, a registered trademark of the Dow Chemical Company, Indianopolis, Indiana.

Flexible container 54, as well as other embodiments disclosed herein may also have means for retension in an upright position during storage, in order to enhance drainage of fluids from the food storage compartment downwardly to the lower drainage sump. To this end the pouches may be gas pressurized to maintain them in an erect position, aligned in an upright manner in a shippin carton or suspended from a bracket (not shown) engaged through perforation 84 (FIG. 3).

FIG. 4 illustrates a further embodiment comprising a three-dimensional, generally rectangular shaped polyolefin kraft-style grocery bag 86 having vericle sidewalls 87, 89, 91 and 93. Side walls 89 and 93 are shown with creases 90 and 92 which permit folding the container for compactness and convenient storing prior to use. The container floor 97 is formed from the sidewalls by welding bottom cross seam 88 and triangular side flaps 99 and 101. Separator 94 spaced from floor 97 preferably comprises a one-piece panel folded into four substantially V-shaped incurvated sections 96, 98, 100 and 102 where liquid collecting troths 104, 106, 108 and 110 extend radially from centrally located liquid drain 112 to the edges of the vertical sidewalls. Alternatively, separator 94 may also have a substantially flat or planer surface spaced from floor 97. In the case of a nonincurvated, planer surface separator 94 will usually have a multiplicity of perforations allowing for drainage of liquids. Separator 94 is fixed to each of the sidewalls by means of flange welds 114, 116, 118 and 120. Accordingly, liquid released by freshly processed foodstuffs stored in upper food compartment 122 will descend by gravity to divider 94 collecting in troths 104, 106, 108, 110 and be discharged through the drain opening into the lower collecting sump 124, automatically separating the foodstuff from liquid discharged therefrom.

Flexible container 86 may also be prepared from a polyolefin lined kraft-type paper. The flexible three-dimensional rectangular style containers of FIG. 4 may als be fabricated into rigid type containers.

FIG. 5 shows a further rigid type container 126 according to the present invention molded from a food grade polymer, e.g. high density polyethylene, polypropylene, etc. The container includes a tapered molded annular body 128 having an enlarged lip or bead 129 at the upper rim which engages with rounded outer flange 134 of lid 132, making an air tight sealed connection. Rigid container 126 includes a base member 130 molded to the annular body 128 forming a container bottom and a substantially funnel-shaped divider 136 in the interior of the container spaced from base member 130 and welded to the inside wall of body 128 by means of weld 138. It is understood that rigid container 126 may also be equipped with a generally concave-shaped insert as a divider. Opening 139 in the divider allows liquid 144 released from sliced tomatoes 146 stored in upper food compartment 140 to drain and collect in the lower drainage sump 142.

A further embodiment of the invention illustrated in FIG. 6 comprises a two-dimensional flexible bag 148 which may have a tubular body 150 with a single bottom cross weld 152. Upper food compartment 154 and lower drainage sump 156 are defined by a substantially flat divider 158 running parallel with bottom cross weld 152 and upper closure weld 153 formed preferably from multiple spaced skip seals which define openings 160 for drainage of liquid 161 from tomato slices 162 to the lower sump.

FIG. 7 is a rigid bucket type container having a tapered annular sidewall 166 with a base 168 forming the container bottom molded thereto and equipped with a gas tight snap lid 170. The interior of the bucket equipped with a flat disc-shaped divider 172 in close proximity to base 168 has multiple perforations 174 for drainage and separation of liquid from tomatoes 176.

Performance of the storage containers and methods disclosed herein for extended shelf-life of perishable foodstuffs may be supplemented by use of a "controlled atmosphere" or "predetermined gas phase" which terms are intended to mean whatever gaseous environment is generally effective in maintaining product quality and freshness while retarding bacterial growth and other factors influencing product deterioration. Thus, the packaging articles and methods for enhancing shelf-life of a particular food product may include, for instance, flushing the container with an inert gas, like nitrogen, or forming a partial vacuum by withdrawing ambient air prior to sealing. In order to control or retard respiration of freshly processed vegetables, ambient air may be flushed from the container and oxygen or some other gaseous mixture injected in place thereof. Freshly sliced cucumbers for example, when exposed to a controlled gas phase, such as a mixture comprising 20% oxygen, 30% carbon dioxide and 50% nitrogen may reduce the rate of chemical reaction in the food, control bacterial growth and thereby reduce product deterioration and spoilage.

## EXAMPLE

In testing the packages disclosed herein, flexible containers of the type illustrated in FIG. 1 with dividers were filled with freshly sliced cucumbers and sealed with an ambient air atmoshphere. As controls, similar pouches prepared without dividers and filled with cucumbers were sealed with ambient air. The vegetables in the pouches without the dividers were observed to have a seven to eight day shelf-life. By comparison, the cucumbers stored in the bags with the divider which separated the vegetables from the liquid residue, exhibited a shelf-life in excess of 12 days.

Although the invention has been described in considerable detail with respect to the preferred embodiments thereof, it will be apparent that the invention is capable of numerous modifications and variations to those skilled in the art without departing from the spirit and scope of the invention, as defined in the appended claims.

## Claims

1. A closable storage container for enhancing the shelf-life of perishable products, which comprises a liquid impermeable container body, said container body having means for preventing loss of liquid therefrom at a first end, said container body and means for preventing the loss of liquid defining an interior chamber with a product inlet at a second end, said interior chamber having divider means for forming an upper chamber contiguous to said product inlet for storage of said perishable products, and a lower chamber for storage of liquids released by said perishable products, said divider means having means for drainage of liquid from said upper chamber to said lower chamber, said divider means engaging the container body without first engaging said means for preventing loss of liquid at said first end.

2. The closable storage container of Claim 1 which is a flexible receptacle.

3. The closable storage container of Claim 1 which is a rigid receptacle.

4. The closable storage container of Claim 2 wherein the flexible receptacle is a sealable pouch.

5. The closable storage container of Claim 4 wherein said divider means for said sealable pouch has a generally incurvated configuration towards the lower storage chamber, said divider means having at least one opening for drainage.

6. The closable storage container of Claim 5 wherein said incurvated configuration of the divider is a generally V-shaped seal formed on said pouch with at least one gap in said seal for drainage.

7. The closable storage container of Claim 2 wherein said container body of the flexible receptacle has a generally tapered sidewall.

8. The closable storage container of Claim 3 wherein said container body of the rigid receptacle has a generally tapered sidewall.

9. The closable storage container of Claim 5 wherein said opening in said divider means includes valve means for controlling the back flow of liquid from the lower chamber to the upper chamber.

10. A storage container for enhancing the shelf-life of perishable products comprising a liquid impermeable sealable bag, said bag having means for preventing loss of liquid therefrom at a first end, said bag and means for preventing the loss of liquid defining an interior chamber with a product inlet at a second end, said interior chamber having divider means for forming an upper chamber contiguous to said product inlet for storage of said perishable products, and a lower chamber for storage of liquids released by said perishable products, said divider means having means for drainage of liquid from said upper chamber to said lower chamber.

11. The storage container of Claim 10 wherein the divider means comprises a seal formed on said bag with at least one gap in said seal for drainage.

12. The storage container of Claim 11 wherein the seal formed on said bag is generally V-shaped and comprises at least one gap for drainage.

13. A method for enhancing the shelf-life and freshness of food products during storage, which comprises the steps of:

   a) providing a closable container consisting of a liquid impermeable container body, said body having means for preventing loss of liquid therefrom at a first end, said body and said means for preventing the loss of liquid defining an interior chamber with a food product inlet at a second end, said interior chamber having divider means for forming an upper chamber contiguous to said food product inlet for storage of said food products, and a lower chamber for collection and storage of liquids released by said food products;

   b) filling the upper chamber of said container with a food product;

   c) modifying the gaseous atmosphere of said interior chamber; and

   d) closing the second end of said container.

14. The method for enhancing the shelf-life and freshness of food products according to Claim 13 wherein said sealable container is a rigid container.

15. The method for enhancing the shelf-life and freshness of food products according to Claim 13 wherein said sealable container is a flexible bag.

16. The method for enhancing the shelf-life and freshness of food products according to Claim 13, including the step of replacing the ambient air in said container with a gas selected from the group consisting of oxygen, carbon dioxide, nitrogen and mixtures thereof.

17. The method of enhancing the shelf-life and freshness of food products according to Claim 13 wherein the modification of the gaseous atmosphere is by gas flush packaging.

18. The method for enhancing the shelf-life and freshness of food products according to Claim 15 wherein the food product is a vegetable.

19. The method for enhancing the shelf-life and freshness of food products according to Claim 15 wherein the food product is a meat product.

20. The method for enhancing the shelf-life and freshness of food products according to Claim 13 wherein the meat product is poultry.

21. The method for enhancing the shelf-life and freshness of food products according to Claim 13 wherein the meat product is sausage.

22. The method for enhancing the shelf-life and freshness of food products according to Claim 13 wherein the food product is fish or seafood.

23. The method for enhancing the shelf-life and freshness of food products according to Claim 13 wherein the food product is fruit.

Fig.1.

Fig.2.

Fig.3.

Fig.4.

Fig. 5.

Fig. 7.

Fig. 6.